# EUROPÄISCHE PATENTSCHRIFT

(11) **EP 2 218 685 B1**
(45) Veröffentlichungstag und Bekanntmachung des Hinweises auf die Patenterteilung: **25.01.2012**
(21) Anmeldenummer: 10153648.0
(22) Anmeldetag: 15.02.2010
(51) Int. Cl.: C01G 9/02

(54) **Zinkoxid-Kristallpartikel und Verfahren zu der Herstellung**
Zinc oxide crystal particle and method for its production
Particules de cristal d'oxyde de zinc et procédé de fabrication

(30) Priorität: 16.02.2009 DE 102009009182
(43) Veröffentlichungstag der Anmeldung: 18.08.2010
(73) Patentinhaber: Süd-Chemie AG, 80333 München (DE)
(72) Erfinder: Wölk, Hans-Jörg, Dr., 83022 Rosenheim (DE); Hagemeyer, Alfred, Dr., 83043 Bad Aibling (DE); Grossmann, Frank, Dr., 81667 München (DE)
(74) Vertreter: Stolmár, Matthias

(56) Entgegenhaltungen:
- EP-A1- 2 092 976
- EP-A1- 2 157 053
- DE-A1-102006 046 803
- DE-A1-102006 046 806
- DE-A1-102007 003 744
- JP-A- 7 025 614
- US-A1- 2003 139 288

## Beschreibung

Die vorliegende Erfindung betrifft Zinkoxid bestehend aus Kristallpartikeln mit einer BET Oberfläche von größer 45 m²/g sowie ein Verfahren zu dessen Herstellung. Weiter betrifft die vorliegende Erfindung die Verwendung des Zinkoxids als Katalysator oder als Katalysatorbestandteil, insbesondere in der heterogenen Katalyse und in der Photovoltaik.

Zinkoxid, ZnO, mit einer molaren Masse von 81,39 g/mol, ist ein weißes, lockeres Pulver mit einer Dichte von 5,65 - 5,68 g/cm³. Es kristallisiert in der Wurtzitstruktur. In Wasser ist es unlöslich, in Säuren und Alkalien löst es sich unter Salzbildung. Kristallines Zinkoxid weist eine hohe thermische und chemische Stabilität auf und besitzt besondere elektrische und optische Eigenschaften. Zinkoxid ist ein Halbleiter (Sauerstoff-Fehlstellenleiter). Zinkoxid dient beispielsweise als Aufheller in Malerfarben, Lacken, Grundierungen, Spachtelmassen, Glas- und Keramikprodukten.

Hochreines Zinkoxid wirkt außerdem entzündungshemmend und bakteriostatisch und ist in medizinischen und kosmetischen Produkten enthalten. Die fein verteilten Zinkoxid-Partikel, die UV-A Strahlen reflektieren, bilden ein im visuellen Wellenlängenbereich unsichtbares Schutzschild auf der Haut.

Prinzipiell stehen zwei Möglichkeiten zur Synthese von Zinkoxidpulvern zur Verfügung, nasschemische Prozesse und Gasphasenprozesse. In der Regel dienen bei den nasschemischen Prozessen Zinkverbindungen als Ausgangsmaterial, die thermisch in Zinkoxid überführt werden können, wie zum Beispiel Zinkhydroxid, Zinkoxalat oder Zinkcarbonat. Nachteilig bei der nasschemischen Methode ist, dass die erzeugten Zinkoxidpartikel zu größeren Einheiten agglomerieren, die speziell in kosmetischen Anwendungen unerwünscht sind. Der nasschemischen Prozess, gewöhnlich als Batch-Prozess durchgeführt, umfasst als Verfahrensschritte Filtrationen und die Trocknung der Partikel, welche relativ kostenintensiv sind.

Ferner sind Verunreinigungen bedingt durch die Prozessführung und die verwendeten Ausgangsmaterialien nicht oder nur sehr schwierig aus dem fertigen Produkt zu entfernen.

Gasphasenprozesse oder pyrogene Prozesse ermöglichen einen kostengünstigeren Prozess. Dabei erfolgt typischerweise eine Oxidation von Zinkdampf (z.B. US 6,335,002). Nachteilig hierbei ist die Bildung großer Aggregate aus Primärpartikeln und eine niedrige BET-Oberfläche.

Bei Teilchen (Kristalliten) aus katalytisch aktiven Verbindungen ist der Wert für deren BET-Oberfläche ein wichtiger Parameter, da eine höhere BET-Oberfläche generell auch die katalytische Aktivität erhöht, so dass es folglich erstrebenswert ist, Teilchen katalytisch aktiver Verbindungen zu erhalten, die eine hohe BET-Oberfläche aufweisen. Je kleiner die Kristallite (ohne Aggregation) sind, desto größer ist ihre aktive Gesamtoberfläche und desto höher folglich ihre katalytische Aktivität.

"Nanokristallin" im Sinne der vorliegenden Erfindung bedeutet, dass die Partikel einen Durchmesser von höchstens 100 nm aufweisen.

Nanokristalline Partikel weisen typischerweise eine sehr hohe spezifische Oberfläche auf. Die spezifische Oberfläche gibt an, welche Oberfläche ein Kilogramm eines Pulvers hat. Nanokristalline Partikel neigen aber zu Agglomeration und zu erhöhtem Kornwachstum bei Sinterprozessen. Durch die Agglomeration der Partikel gehen häufig deren spezifischen Eigenschaften verloren. So werden beispielsweise Agglomerate von Nanopartikeln bzw. -kristalliten wieder sichtbar, wenn sie eine kritische Größe überschreiten, da die Lichtstreuung an den Agglomeraten abläuft. Um im sichtbaren Bereich eine vollkommen transparente Verteilung nanokristalliner Teilchen in flüssigen (z.B. Dispersionen) und festen Medien (z.B. Polymer-Nanokomposite) zu erhalten, muss eine Agglomeration verhindert werden.

Die Agglomeration kann z.B. durch eine Beschichtung der nanokristallinen Partikel unterbunden werden. Eine Modifizierung der Partikeloberfläche mit beispielsweise organischen Molekülen, wie Tensiden, sorgt dafür, dass sich die nanokristallinen Partikel bei moderaten Temperaturen nicht zusammenballen. Durch die Beschichtung der Partikel können die Oberflächeneigenschaften so eingestellt werden, dass sich die Partikel in verschiedenen Matrizes dispergieren lassen. Die Oberflächenmodifizierung von ZnO-Partikeln nach ihrer Herstellung wird z.B. von Guo, L. et al. Chem. Mater., 2000, 12, 2268-2274 und Armeiao, L. et al. Thin Solid Films, 2001, 394, 90-96 beschrieben. Aus der WO 02/49684 A2 sind chemisch oder physikalisch modifizierte ZnO Nanopartikel bekannt.

Verwendung finden diese ZnO Nano-Partikel auch als Trägermaterial für Industrie-Katalysatoren. Katalysatoren auf Zinkoxid-Basis werden für die industrielle Methanolsynthese verwendet. Methanol ist nach Ammoniak und Schwefelsäure die dritthäufigste Grundchemikalie in der Chemieindustrie. In Zukunft könnte Methanol als chemischer Speicher für Wasserstoff Verwendung finden, insbesondere in speziellen Fahrzeugprototypen, die Methanol tanken, um daraus in Brennstoffzellen den Strom für ihren Antrieb zu gewinnen.

Nach aktuellen Forschungen eignet sich Zinkoxid auch zur katalytischen Reinigung von Abwässern, etwa durch den Abbau von giftigen chlorierten Phenolen. Auch auf dem Gebiet der Hygiene-Produkte findet ZnO Anwendung (siehe WO 02/49684).

Das Herstellungsverfahren von ZnO ist dabei entscheidend für die Erzeugung kleiner Partikeldurchmesser und hoher spezifischer Oberflächen.

Mechanische Herstellungsverfahren z.B. durch Vermahlen sind ungünstig, da hier zumeist inhomogene, nicht monomodale Partikelgrößenverteilungen erreicht werden, bzw. die Partikel aufgrund des auf die Partikel ausgeübten Druckes amorph werden. Die allgemeine Partikelgröße ist generell zu groß, um die gewünschten kleinen Kristallite nach der mechanischen Zermahlung zu erhalten.

Nanokristallines ZnO mit einem Partikeldurchmesser von weniger als 100 nm, kann weiter z.B. über Fällungsreaktionen in einem Sol-Gel-Prozess hergestellt werden (Bahnemann, D.W. et al.; J. Phys. Chem., 14, 1987, 91, 3789-3798 und Spanhel, L. Et al.; J. Am. Chem. Soc, 8, 1991, 113, 2826-2833). Die technische Herstellung von Nano-Zinkoxid-Solen über den nasschemischen Syntheseweg ist bekannt. In den Versuchsvorschriften wird von 1 M methanolischen Zinkacetat-Lösungen ausgegangen, in die bei 55 °C unter Rühren methanolische Kaliumhydroxid-Lösung getropft wird. Der entstehende Zinkoxid-Niederschlag wird viermal mit Methanol gewaschen und zentrifugiert, anschließend wird das Zinkoxid-Gel in Dichlormethan bzw. Ethylenglykol/Wasser/Triethanolamin-Lösung zum Sol dispergiert (DE 10212121 A1, DE 19907704 A1, EP 1157064 A1, DE 10118309 A1, DE 19751448 A1) . Nanoskalige ZnO Teilchen können auch direkt aus einer wässrigen Lösung auf eine Substratoberfläche abgeschieden werden (EP 0 791 681 A1).

Sehr fein verteiltes Zinkoxid kann auch aus heißen Zinkoxiddämpfen auf vergoldeten Saphiroberflächen selbstorganisiert kondensieren. Dabei entstehen winzige Zinkoxidsäulen. So können Nanofasern für Solarzellen, Gassensoren, lichtemittierende Dioden und spezielle Kristalle hergestellt werden.

Typische Verfahren zur Herstellung von ZnO Pulver verwenden herkömmliche Sprühkalziniertechniken oder Bandkalzinierer. Die DE 10212680 A1 offenbart ein vierstufiges Verfahren zur Herstellung eines nanoskaligen pyrogenen Zinkoxidpulvers mit einer BET-Oberfläche von 10 bis 200 m²/g in Form von Aggregaten von anisotropen Primärpartikeln, wobei die Aggregate einen mittleren Durchmesser von 50 bis 300 nm aufweisen. Das Problem ist auch hier die Aggregation und die anisotrope Morphologie der Primärteilchen.

Die WO 03/048047 A1 beschreibt eine Methode zur Herstellung von ZnO Nanopulver, bei der Zinknitrat-Hydrate durch explosionsartige Verfeuerung mit einem Treibstoff unter hohem Druck und hohen Temperaturen (1500 bis 1700 °C) zersetzt werden und wobei unter Abgabe von N₂ und CO₂ ZnO in Pulverform entsteht. Allerdings benötigt dieses Verfahren sehr hohe Temperaturen und die Produkte weisen keine hohen spezifischen Oberflächen und überdies eine multimonomodale Größenverteilung auf.

Um dem Problem der Aggregation Herr zu werden, wurde ein Verfahren zur Herstellung monomodaler nanokristalliner Oxidpulver entwickelt und in der DE 10109892 A1 beschrieben. Zur Herstellung von nanoskaligem Oxid- oder Mischoxid-Pulver wird ein sogenanntes Pulsationsreaktor-Verfahren verwendet. In dem Pulsationsreaktor wird ein pulsierender Heißgasstrom erzeugt. In diesen Heißgasstrom wird eine Rohstoffmischung eingebracht, wobei diese durch eine thermoschockartige Zersetzungsreaktion in wenigen Millisekunden umgewandelt wird.

Durch die pulsierende Verbrennung und den dadurch bedingten hohen Strömungsturbulenzen wird ein deutlich erhöhter Wärmeübergang erreicht. Dieser erhöhte Wärmeübergang ist entscheidend für den Ablauf der Phasenreaktion im Material und für einen vollständigen Umsatz der Edukte innerhalb kurzer Verweilzeiten.

Das Wirkprinzip des Pulsationsreaktors gleicht dabei dem eines akustischen Hohlraumresonators, der aus einem Brennraum und einem Resonanzrohr besteht, wobei letzteres einen gegenüber dem Brennraum deutlich verminderten Strömungsquerschnitt aufweist. Der Brennraum ist mit einem oder mehreren Ventilen zum Eintritt von Brenngasgemischen versehen. Der Brennstoff sowie die notwendige Verbrennungsluft werden in einer vorgeschalteten Mischkammer vorgemischt und gelangen gemeinsam über die Ventile in den Brennraum. Dort werden sie gezündet, verbrennen sehr schnell und erzeugen eine Druckwelle in Richtung des Resonanzrohres.

Infolge der Verbrennung strömt Heißgas in das Resonanzrohr aus, so dass der Überdruck im Brennraum reduziert wird und durch die Ventile neues Brenngasgemisch nachströmen kann und von selbst zündet. Durch periodisches Schließen und Öffnen der Ventile wird wechselweise ein Druck bzw. ein Unterdruck aufgebaut. Der pulsierende Verbrennungsprozess im Brennraum setzt mit der Ausbreitung einer Druckwelle im Resonanzrohr Energie frei und regt dort eine akustische Schwingung an.

Derartige pulsierende Strömungen sind durch einen hohen Turbulenzgrad gekennzeichnet. Die hohen Strömungsturbulenzen verhindern den Aufbau einer Temperaturhülle um die sich aus der Rohstoffmischung bildende Partikel, wodurch ein höherer Wärmeübertrag möglich ist. Die dadurch bedingten kurzen Verweilzeiten der Partikel im Reaktor führen zu einem besonders hohen Materialdurchsatz. Typischerweise liegt die Verweilzeit bei weniger als einer Sekunde.

Zudem erreicht ein besonders großer Anteil der gebildeten Partikel mit diesem Verfahren eine gewünschte isotrope sphärische Form. Die schnelle Reaktion führt weiterhin bei der Ausbildung der festen Phase der Partikel zu einem hohen Anteil an Gitterfehlordnungen und infolgedessen zu einer hohen Reaktivität der Partikel. Zur Abscheidung von Reaktionsprodukten aus dem Heißgasstrom dient eine geeignete Abscheideinrichtung für Feinstpartikel.

Durch diesen thermophysikalischen Pulsationsprozess werden feinteilige isotrope Oxid-Partikel erzeugt, deren Aggregation trotz der hohen spezifischen Oberflächen unterdrückt wird. Allerdings müssen die eingesetzten Ausgangsstoffe zuerst vorverdampft und dann bei hohen Temperaturen von 700 °C bis 1800 °C verbrannt werden. Diese hohen Temperaturen sind notwendig, um möglichst entropisch begünstigte sphärische Morphologien der Kristalle zu erreichen. Durch die hohe kinetische Energie werden gerade runde Partikel mit entropisch gesteuertem kleinen Durchmesser begünstigt.

Außerdem wird nur die Herstellung nanokristalliner Oxidpulver von Metallen der II. bis V. Hauptgruppe des Periodensystems in der generischen Form MeO und MeₓO_{y} beschrieben. Als Ausgangsstoffe werden dabei die Chloride von A1, Si, Ti, Zr, Y, Ce, Mg und Ca verwendet.

Erweitert wurde die Anwendung dieses Verfahrensprinzips inzwischen auch auf Mischkristalloxide, deren nanokristalline Herstellung gelang (WO 2008/028681 A2).

Allerdings ist die Darstellung insbesondere von nanokristallinen ZnO-Pulvern mit Problemen behaftet. Insbesondere zeigen die mit dem Pulsationsverfahren hergestellten ZnO-Partikel, trotz einer hoher Verfeuerungstemperatur von oberhalb 650°C, spezifische Oberflächen von lediglich bis zu 35 m²/g nach BET (siehe Beispiele, DE 10 2006 046 806 A1) . In der DE 10 2007 003 744 A1 werden ZnO-Partikel mit einer BET-Oberfläche von bis zu 44 m²/g offenbart.

Zusätzlich besteht bei hohen Verbrennungstemperaturen und Verweilzeiten im Brennraum die Gefahr, dass wertvolle Hydroxyfunktionalitäten an den ZnO Kristallkörpern ausgeglüht werden und somit zur weiteren Funktionalisierung der Kristalle nicht mehr zur Verfügung stehen.

Ein weiteres Problem ist üblicherweise der hohe Kohlenstoffanteil des Produkts, der so gering wie möglich gehalten werden sollte. Bei der Dampfreformierung von Methanol werden CuO/ZnO/Al₂O₃-basierte Katalysatoren verwendet, die oft einen hohen Kohlenstoffgehalt im Katalysator aufweisen. Das Produkt weist neben Wasserstoff und Kohlendioxid oft zu hohe C-Gehalte auf (siehe H. Purnama, Catalytic Study of Copper based Catalysts for Steam Reforming of Methanol; Dissertation Berlin 2003).

In der DE 102007003744 A1 z.B. wird Zinkacetat als Ausgangsstoff eingesetzt. Es wäre aber von Vorteil, ganz auf kohlenstoffhaltige Ausgangsstoffe zu verzichten oder diese zu verringern, um den Kohlenstoffanteil der Produkte ganz zu eliminieren.

Allerdings ist dem Fachmann auch bekannt, dass die Verwendung von wässrigen Rohstoffgemengen, wie z.B. Nitratlösungen, bei niedrigen Temperaturen für das Pulsationsverfahren problematisch ist.

So beschreibt die DE 102007003744 A1, dass es durch die thermoschockartige Behandlung bestimmter Rohstoffgemenge, speziell bei der Verwendung von wässrigen Rohstoffgemengen (Nitratlösungen), zu einer Krustenbildung bei den eingesprühten Rohstofftröpfchen durch Verdampfung an der Tröpfchenoberfläche und der damit verbundenen Aufkonzentration der Inhaltsstoffe kommt. Diese Kruste steht zunächst dem Entweichen von gebildeten gasförmigen Stoffen (z.B. thermische Zersetzung der Lösungsmittel oder Abspaltung von Nitrat) aus dem Inneren der Rohstofftröpfchen entgegen. Durch den Gasdruck werden die Krusten jedoch letztlich gesprengt und es bilden sich Partikel mit so genannter Hohlkugelstruktur.

Gerade für die katalytischen Anwendungen sind sphärische Morphologien ohne Hohlkugelstruktur jedoch bevorzugt.

Die Krustenbildung tritt vor allem bei niederen Brenntemperaturen auf. Außerdem erfolgt bei einer reduzierten Prozesstemperatur nicht in jedem Fall eine vollständige Stoffumwandlung. Weiterhin wäre es aus prozessökonomischen Gründen vorteilhaft auf eine Zweitfeuerung, wie sie in der DE 102007003744 A1 beschrieben wurde, zu verzichten.

Der Nachteil der durch die im Stand der Technik beschriebenen Verfahren hergestellten ZnO-Partikel besteht generell in ihrer geringen spezifischen Oberfläche, die sie ungeeignet für einen effizienten Einsatz als Katalysator macht. Ferner weisen die Pulver eine zu hohe Aggregation auf. Die ZnO Partikel sollten zudem einen geringeren Kohlenstoffgehalt enthalten und sollten in Reinform ohne Substrat, bzw. Träger oder mit mischoxidischen Zusätzen vorgelegt werden können.

Des Weiteren wird dem Fachmann kein Weg aufgezeigt, aggregationsfreie nanokristalline ZnO Partikel mit hohen spezifischen Oberflächen und geringem Kohlenstoffgehalt darzustellen. Gängige Verfahren verlangen hohe Verbrennungstemperaturen oder eine zusätzliche nachträgliche Zuführung eines Energieträgers.

Das der Erfindung zugrundeliegende technische Problem bestand daher in der Bereitstellung von nanokristallinen ZnO-Partikeln, welche auch ohne Beschichtung eine hohe Oberfläche bei geringer Aggregationsneigung und damit eine hohe katalytische Aktivität aufweisen.

Erfindungsgemäß gelöst wird dieses Problem durch ein nanokristallines Zinkoxid mit einer BET-Oberfläche von größer 45 m²/g.

Der Begriff "Zinkoxid" bezieht sich erfindungsgemäß ausschließlich auf das zweiwertige kristalline Zinkoxid mit der Formel ZnO.

Bevorzugt liegt die BET-Oberfläche des erfindungsgemäßen nanokristallinen Kupferoxids in einem Bereich von 45 bis 300 m²/g. Die untere Grenze der BET-Oberfläche ist dabei besonders vorteilafterweise größer 70 m²/g, am bevorzugtesten größer 100 m²/g.

Die hohe BET-Oberfläche erhöht auch im Zusammenhang mit dem weiter unten beschriebenen niedrigen Kohlenstoffgehalt die katalytische Aktivität und überraschenderweise auch die Selektivität des erfindungsgemäßen Zinkoxids als Katalysator, bzw. Katalysatorbestandteil, insbesondere in den vorgenannten Reaktionen.

Bevorzugt weist daher das erfindungsgemäße Zinkoxid einen Restkohlenstoffgehalt von kleiner 10 % auf, besonders bevorzugt von weniger als 5 %, ganz besonders bevorzugt von kleiner 2 %, bezogen auf das Gesamtgewicht des ZnO. Der genaue Kohlenstoffgehalt ist durch die Prozessparameter bei der Herstellung bedingt und ist auch abhängig vom Ausgangsmaterial. Bei kohlenstofffreien Precursormaterialien weist das erfindungsgemäße Zinkoxid keinen oder nur einen sehr geringen Restkohlenstoffgehalt von kleiner 1 % auf.

Bevorzugt weist das Pulver des nanokristallinen Zinkoxids eine monomodale Größenverteilung der Kristallpartikel auf. Gerade für den Einsatz als Katalysator ist eine klar definierbare Größenverteilung vorteilhaft. Durch eine monomodale Verteilung lässt sich die Teilchengröße leichter einstellen.

Ferner liegen die nanokristallinen Zinkoxid-Kristallpartikel in einer weitestgehend isotropen Morphologie mit einem Isotropie-Formfaktor größer 0,5 vor. Unter "isotroper Morphologie" wird eine weitestgehend sphärische Form verstanden.

Diese wird definiert über einen Formfaktor F(circle) von größer als 0,5. Die Größe F(Circle) beschreibt die Abweichung eines Kristallpartikels von einer idealen Kreisform. F(Circle) ist gleich 1 für ein ideales kreisförmiges Objekt. Je kleiner der Wert, desto weiter ist die Struktur des Objektes von der idealen Kreisform entfernt. Die Definition des Parameters erfolgt gemäß ASTM 3849-89.

Die Messung des Formfaktors kann durch Auswertung von TEM Bildaufnahmen erfolgen. Dazu wird ein Datensatz von ungefähr 500 Kristallpartikel mittels CCD Kamera des TEM-Geräts (z.B. eines Hitachi H-75000-2) und anschließender Bildanalyse aufgenommen und ausgewertet.

Bevorzugterweise weisen die Kristallpartikel des nanokristallinen Zinkoxids eine geringe Aggregation der Teilchen mit einem Aggregationsfaktor AGR von kleiner 0,7 auf und noch bevorzugter mit einem AGR von kleiner 0,3 und am bevorzugtesten von kleiner 0,05.

Die Aggregation wird definiert über einen Aggregationsfaktor AGR mit Werten von 0 bis 1. Diese bezeichnet den prozentualen Anteil der freistehenden Partikel. Bei AGR = 0 sind 100% aller Partikel vollständig freiliegenden. Gemessen wird der AGR Faktor über die Auswertung von TEM-Bildaufnahmen der Kristallpartikel, wie oben beschrieben.

Die Agglomerationsneigung der Kristallpartikel führt zu einer geringeren und unspezifischeren katalytischen Aktivität. Außerdem hat sie einen negativen Einfluss auf die spezifische Oberfläche.

Es ist bevorzugt, dass die Kristallpartikel des nanokristallinen Zinkoxids unmodifiziert vorliegen. Zur Unterbindung der Agglomerationsneigung der Partikel werden im Stand der Technik die oben beschriebenen Verfahren eingesetzt, um die Kristallteilchen zu beschichten (siehe DE 102006046806 A1). Allerdings kann die Beschichtung zu einer Verringerung der spezifischen Oberfläche führen. Die vorteilhaften Eigenschaften der vorliegenden Zinkoxidpartikel sollen bevorzugt daher ohne eine Beschichtung erreicht werden.

Außerdem liegen die Kristallpartikel des nanokristallinen Zinkoxids bevorzugt ohne mischoxidische Zusätze oder als Mischoxid vor. Es ist daher bevorzugt, die ZnO Kristallpartikel in Reinform zu erhalten.

Weiterhin bevorzugt ist die Partikelgröße des erfindungsgemäßen Zinkoxids kleiner als 100 nm. Noch bevorzugter liegen erfindungsgemäße Teilchengrößen im Bereich von 4 nm bis 20 nm für Primärkristallite und im Bereich von 20 bis 100 nm für die Sekundärkristallite.

In bevorzugten Weiterbildungen der Erfindung ist das nanokristalline Zinkoxid geträgert, wobei der Träger beispielsweise klassische Trägermaterialien, wie SiO₂, ZrO₂, Bentonit, Boehmit, Montmorillonit, Al₂O₃, TiO₂, CuO, MgSiO₄, CaSiO_{y}, oder klassische Aluminosilikate und Mischungen davon umfassen kann. Generell lassen sich aber für die Zwecke der vorliegenden Erfindung alle keramischen Materialien verwenden, die üblicherweise mit dem Begriff "technische Keramik" bezeichnet werden und sowohl nicht-oxidische (z.B. Carbide, Nitride, Silizide usw.) wie auch oxidische Materialien umfassen (siehe z.B.: Brevier Technische Keramik, Fahner Verlag, Lauf a.d. Pegnitz, 4. Auflage 2003). Das ZnO wird dabei mittels des weiter unten im Detail beschriebenen Verfahrens auf den Träger aufgebracht. Dabei werden für das geträgerte ZnO BET Oberflächen im Bereich von 2 bis 200 m²/g beobachtet. Bevorzugte Systeme sind z. B. CuO/ZnO/Al₂O₃, CuO/ZnO usw.

Bevorzugt liegt die Teilchengröße des geträgerten nanoskaligen Zinkoxids im Bereich von 50 bis 2000 nm, besonders bevorzugt ist eine Teilchengröße im Bereich von 50 nm bis 400 nm. Ganz besonders bevorzugt liegt die mittlere Teilchengröße bei 100 bis 300 nm, am stärksten bevorzugt bei 200 nm ± 10 nm. Diese Größenangaben beziehen sich dabei auf das Gesamtsystem aus Trägerpartikel/ZnO.

In bevorzugten Weiterbildungen umfasst die vorliegende Erfindung ebenfalls einen Formkörper, der erfindungsgemäßes nanoskaliges Zinkoxid, bzw. geträgertes nanoskalige Zinkoxid, enthält. Dieser Formkörper ist ein auf dem Gebiet der Heterogenkatalyse an sich bekannter Formkörper, wie er beispielsweise in Form von beliebigen dreidimensionalen Körpern, wie Tabletten, Ringen etc. vorliegen kann. Das ZnO kann beispielsweise durch Coaten, Sprayen oder mittels Co-Extrusion etc. in oder auf den Formkörper aufgebracht werden. Das Grundmaterial des Formkörpers kann dabei typischerweise mit dem vorstehend beschriebenen Trägermaterial identisch sein.

Die Aufgabe der vorliegenden Erfindung wird weiter gelöst durch die Bereitstellung eines Verfahrens zur Herstellung des erfindungsgemäßen nanokristallinen geträgerten oder nichtgeträgerten Zinkoxids, welches eine möglichst monomodale Teilchengrößenverteilung, eine hohe BET-Oberfläche, weiterhin eine geringe Aggregation der Kristallpartikel, eine weitestgehend isotrope Morphologie aufweist und die weiteren vorgenannten Nachteile des Standes der Technik vermeidet.

Auch sollen Phasenumwandlungen des Produktes während der Synthese vermieden werden und die Partikelgröße einstellbar sein.

Diese Aufgabe wird erfindungsgemäß gelöst durch ein Verfahren, umfassend die Schritte des:
a) Einbringens einer Zinkausgangsverbindung in eine Reaktionskammer mittels eines Trägerfluids,
b) thermischen Behandelns der Zinkausgangsverbindung in einer Behandlungszone der Reaktionskammer mittels einer pulsierenden Strömung bei einer Temperatur von 200 bis 650°C,
c) Bildens von nanokristallinem Zinkoxidmaterial,
d) Ausbringens des in Schritt b) und c) erhaltenen nanokristallinen Zinkoxidmaterials aus dem Reaktor.

Überraschenderweise wurde gefunden, dass durch das erfindungsgemäße Verfahren nanokristalline Zinkoxid-Kristallpartikel hergestellt werden konnten, die eine spezifische BET-Oberfläche im Bereich von größer 45 m²/g, und eine geringe Aggregation sowie eine geringe Anisotropie der Morphologie aufweisen.

Entscheidend wird die spezifische Oberfläche der Teilchen durch die Reaktortemperatur beeinflusst. Üblicherweise führt eine hohe Verbrennungstemperatur zu einer entropisch begünstigten höheren spezifischen Oberfläche. Es wurde jedoch überraschend gefunden, dass das Verfahren bei relativ niedrigen Temperaturen von 200 bis 650 °C, besonders bevorzugt von 250 bis 500 °C, ganz besonders bevorzugt von 300 bis 450 °C durchgeführt werden kann. Dies steht im überraschenden Gegensatz zu den Angaben im Stand der Technik, wobei in vergleichbaren Verfahren Temperaturen von mehr als 700 °C und bis zu 1800 °C, verwendet werden müssen, um nanoskalige kristalline Produkte zu erhalten.

Selbst die Hochtemperaturverfahren der gängigen Technik scheiterten aber bisher bei dem Versuch, nanokristallines ZnO mit geringer Aggregation der Kristallpartikel und Anisotropie darzustellen.

Durch die pulsierende thermische Behandlung werden die entstehenden nanokristallinen Zinkoxidpartikel daran gehindert zu agglomerieren, wobei anschließend typischerweise nanokristalline Produktpartikel durch den Strom an heißem Gas sofort in eine kältere Zone der Reaktorkammer überführt werden, so dass Zinkoxidkristallite mit Durchmessern von weniger als 20 nm erhalten werden können. Hierbei kann der Kristallisationsprozess gezielt gesteuert werden, so dass insbesondere die Größe der Kristallite eingestellt werden kann. Diese lag bevorzugt bei 4 bis 20 nm, noch bevorzugter bei 8 bis 20 nm.

Allerdings konnten auch bisherige Herstellungsversuche von nanokristallinem aggregationsfreien ZnO mit dem Pulsationsverfahren wiederum keine BET-Oberflächen von größer 45 m²/g liefern. Diese Kombination der vorteilhaftigen Merkmale des Zinkoxid Pulvers konnte nun mit dem Herstellungsprozess nach Anspruch 1 erzielt werden.

Bevorzugt wird die Zinkausgangsverbindung in Form einer Lösung, Aufschlämmung, Suspension oder in festem Aggregatzustand in die Reaktionskammer eingebracht. Noch bevorzugter ist die Einbringung einer Zinkausgangsverbindung als Suspension mit einer durchschnittlichen Teilchengröße von kleiner 10 µm.

Ferner bevorzugt wird die Teilchengröße durch Vermahlen der Zinkausgangsverbindung vor Herstellung der Suspension eingestellt.

Weiterhin ist im Stand der Technik der Einsatz von wässrigen Ausgangsverbindungen, insbesondere Zinknitrat Lösungen, als problematisch beschrieben worden, weil diese zur Aufkonzentration in den verdüsten Tröpfchen, zur Krustenbildung und schließlich zur Hohlkugelstruktur der Kristallpartikel führen.

Unerwartet wurde nun jedoch herausgefunden, dass die Einbringung von wässrigen Zink-Eduktlösungen bei den erfindungsgemäßen Verfahrensbedingungen gerade bei der Herstellung von ZnO Kristallpartikeln zu Produkten mit den oben beschriebenen positiven Eigenschaften, insbesondere hohe BET-Oberflächen, führt.

Vorteilhaft ist der Einsatz einer Zinkausgangsverbindung ausgewählt aus der Gruppe, bestehend aus: einer organischen Säure, einem Hydroxid, einem Nitrat, einem Carbonat, einem Hydroxocarbonat oder Mischungen davon. Weiter bevorzugt sind die Hydroxocarbonate aufgrund ihrer leichten Zugänglichkeit, Verfügbarkeit und Kosten. Noch bevorzugter ist, dass die organische Säure eine organische Säure mit weniger als 9 Kohlenstoffatomen ist.

Insbesondere bevorzugt wird die Zinkausgangsverbindung ausgewählt aus der Gruppe, bestehend aus: Zinknitrat, Zinkhydroxocarbonat und Zinkformiat oder Mischungen davon.

Überraschend hat sich herausgestellt, dass gerade Zinknitrat, Zinkhydroxocarbonat und Zinkformiat die besten Ergebnisse bezüglich BET-Oberfläche und Agglomerationsneigung liefern. Die spezifischen Oberflächen sind insbesondere höher als bei den vergleichbaren Proben mit Zinkoxalaten, Zinkoctoaten oder anderen Zink-Verbindungen. Auch die bisher häufig verwendeten Zinkacetate liefern niedrigere BET-Oberflächen.

Weiterhin wurde gefunden, dass der Einsatz der oben genannten Zinkausgangsverbindungen: Zinknitrat, Zinkhydroxocarbonat und Zinkformiat oder Mischungen davon zu einer Minimierung bzw. vollständigen Eliminierung des Restkohlenstoffgehalts im nanoskaligen Zinkoxid Pulver führt.

Vorteilhafterweise können im erfindungsgemäßen Verfahren die Suspensionen ohne weitere Filtrations- und/oder Trocknungsschritte, bzw. ohne Zugabe von Lösungsmitteln innerhalb eines sehr kurzen Zeitraumes, typischerweise innerhalb von wenigen Millisekunden eingesetzt werden.

Ein separater Kalzinierungsschritt ist ebenfalls nicht nötig, weil dies im erfindungsgemäßen Ein-Schritt-Verfahren in der Reaktionskammer erfolgt.

Durch die annähernd gleiche Verweilzeit jedes einzelnen Partikels in dem durch das Verfahren erzeugten homogenen Temperaturfeld entsteht ein äußerst homogenes Endprodukt mit einer engen monomodalen Teilchengrößenverteilung.

Zur Durchführung des erfindungsgemäßen Verfahrens wird beispielsweise auf die DE 1010982 A1 verwiesen. Im Gegensatz zu der dort beschriebenen Vorrichtung und im dort offenbarten Verfahren benötigt das vorliegende Verfahren jedoch keinen vorgelagerten Verdampfungsschritt, in der Ausgangsstoffe auf eine Verdampfungstemperatur erwärmt werden müssen.

Weiter ist gegenüber diesem Verfahren von Vorteil, dass im erfindungsgemäßen Verfahren die Zinkausgangsverbindung als Lösung, insbesondere als wässrige Lösung, als Aufschlämmung, Suspension, oder sogar auch fest eingesetzt werden kann.

Besonders bevorzugt sind zwar Suspensionen von entsprechenden Ausgangsverbindungen, da diese noch einmal nachträglich vermahlen werden können, so dass schon Partikel mit einer sehr kleinen Teilchengröße von kleiner 10 µm in den Reaktor eingebracht werden können, jedoch ist dies nicht unbedingt notwendig. Es wurde beobachtet, dass der Einsatz einer vorab vermahlenen (d.h. vor Einbringung in den Reaktor) Suspension die BET-Oberfläche der Endprodukte um ca. 10 bis 20 % verbessert, verglichen mit nicht vorvermahlten Suspensionen als Ausgangsprodukt. Typischerweise wird also das Pulver vor Herstellung der Suspension vermahlen, jedoch kann auch die so hergestellte Suspension erneut einem Mahlvorgang unterworfen werden.

Mittels des erfindungsgemäßen Verfahrens können die Ausgangsmaterialien typischerweise direkt über ein Trägerfluid, insbesondere ein Trägergas, ganz besonders bevorzugt ein inertes Trägergas, wie beispielsweise Stickstoff etc., in die Reaktionskammer, genauer gesagt in die Brennkammer, eingeführt werden. An die Reaktionskammer ist abgasseitig ein Resonanzrohr mit einem gegenüber der Reaktionskammer deutlich verringerten Strömungsquerschnitt angeschlossen. Der Brennkammerboden ist mit mehreren Ventilen zum Eintritt der Verbrennungsluft in die Verbrennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen "flammenlosen" Temperaturfeldes sich vorwiegend im Resonanzrohr pulsierend ausbreiten. Es bildet sich ein sogenannter Helmholtz-Resonator mit pulsierender Strömung aus.

Typischerweise erfolgt die Zuführung des Ausgangsmaterials in die Reaktionskammer entweder mit einem Injektor oder mit einer geeigneten Zweistoffdüse oder in einem Schenkdosierer.

Vorteilhafterweise lässt sich im Falle der Verwendung von Lösungen von entsprechenden Salzen ein weiterer Fällungsschritt vermeiden, so dass diese direkt im Reaktor kalziniert werden. Bevorzugt ist das Trägerfluid ein Trägergas, wie beispielsweise Luft, Stickstoff bzw. Luft-Stickstoff-Gemische. Natürlich kann alternativ auch eine Flüssigkeit als Fluid verwendet werden, bzw. auch schon in Lösung vorliegende Ausgangsstoffe. Die Art des Trägerfluids hat insbesondere Einfluss auf die Verweilzeit in der Behandlungszone. So können beispielsweise auch direkt Suspensionen und Aufschlämmungen schwer löslicher Ausgangsverbindungen, wie beispielsweise Sulfate, Oxide etc., erfindungsgemäß verwendet werden.

Neben der Zinkausgangsverbindung können vorteilhafterweise noch weitere Verbindungen in dem Verfahren eingesetzt werden, beispielsweise Silikate, Kupferoxid, Titanoxid, Magnesiumsilikat, Calciumsilikat, Aluminiumoxid, Boehmit, Zirkoniumoxid, Alumosilikate etc. Wie schon vorstehend ausgeführt lassen sich aber alle keramischen Materialien dafür verwenden, die üblicherweise mit dem Begriff "technische Keramik" bezeichnet werden und sowohl nicht-oxidische (z.B. Carbide, Nitride, Silizide usw.) wie auch oxidische Materialien umfassen (siehe z.B.: Brevier Technische Keramik, Fahner Verlag, Lauf a.d. Pegnitz, 4. Auflage 2003).

Dies führt dazu, dass in einem einzigen Schritt mittels des erfindungsgemäßen Verfahrens geträgerte Zinkoxid-Katalysatoren erhalten werden können, da diese schon auf den späteren Trägermaterialien im Reaktor abgeschieden werden. Diese werden typischerweise als Suspension zugegeben, entweder durch eine separate Düse oder vermischt mit der Lösung/Suspension der Zinkausgangsverbindung. Das Trägermaterial kann aber auch in gelöster oder peptisierter Form vorliegen.

Mit dem erfindungsgemäßen Verfahren können somit auch katalytisch interessante binäre bzw. polynäre Systeme, wie z. B. CuO/ZnO/Al₂O₃, CuO/ZnO etc. beispielsweise für die Dampfreformation von Methanol besonders einfach erhalten werden, sowie weitere komplexe Katalysatorsysteme, die auf der Synergie verschiedener Metalloxide beruhen. Dabei werden weitere lösliche oder nicht lösliche Verbindungen zugegeben, wobei die weiteren Verbindungen bevorzugt ausgewählt sind aus der Gruppe, bestehend aus Verbindungen des Siliziums, Zinns, Magnesiums, Titans, Aluminiums, Zirkons, Zinks sowie Mischungen davon. Für diese Verbindungen gilt das weiter oben ausgeführte für die Zinkausgangsverbindungen analog, natürlich können auch deren oxidische Suspensionen oder sogar die Verbindungen in Form von Feststoffen in dem erfindungsgemäßen Verfahren eingesetzt werden.

Durch die Kontrolle der Pulsation (regelmäßig oder unregelmäßig bzw. die Dauer und Amplituden der pulsierenden thermischen Behandlung) sowie der Verweilzeit der Ausgangsverbindung(en) in der Behandlungszone (typischerweise von 200 ms bis 2 s) kann auch die Partikelgröße eingestellt werden. Bevorzugte Werte liegen bei 2 bis 300 ms und 1 bis 40 Hertz.

Anschließend werden nach der thermischen Behandlung der entstandenen nanokristallinen Zinkoxide bzw. gemischten Oxide, wenn möglich, mittels des Trägerfluids sofort in eine kältere Zone der Reaktionskammer überführt, so dass sie in der kälteren Zone ausgetragen werden können. Die Ausbeute des erfindungsgemäßen Verfahrens beträgt dabei nahezu 100 %, da das entstehende Produkt vollständig aus dem Reaktor ausgeführt werden kann.

Wie vorstehend schon ausgeführt, wurde überraschenderweise gefunden, dass trotz der niedrigen Verbrennungstemperatur auch in wässriger Lösung vorliegende Verbindungen, insbesondere auch Nitrate des Zinks, als Ausgangsstoffe verwendet werden können, die erfindungsgemäß durch die anschließende pulsierende Temperaturbehandlung in nanokristalline Partikel umgewandelt werden. Durch die niedrige Temperatur, die im erfindungsgemäßen Verfahren eingesetzt wird, sinkt zudem die Gefahr von Zersetzungs- und Nebenreaktionen, beispielsweise beim Einsatz von Carbonsäurederivaten, die zu Verunreinigungen des Produktes führen könnten. Weiterhin ist auch die Energiebilanz bei der Durchführung des erfindungsgemäßen Verfahrens sehr günstig, da der Energieverbrauch bei niederer Temperatur, verglichen mit herkömmlichen Verfahren geringer ist.

Typischerweise wird das Verfahren bei einem Druck zwischen 15 bis 40 bar durchgeführt.

Weiterhin ist Gegenstand der vorliegenden Erfindung die Verwendung der erfindungsgemäßen nanokristallinen ZnO Kristallpartikel in geträgerter oder nicht-geträgerter Form als Katalysator oder Katalysatorprecursor.

In einer vorteilhaften Ausgestaltung wird dabei das erfindungsgemäße ZnO zur Herstellung eines Katalysators zur Entschwefelung von Kohlenwasserstoffen verwendet, wie er beispielsweise in der DE 10 2005 004 429 A1 offenbart ist, auf deren Offenbarungsgehalt hier vollumfänglich Bezug genommen wird.

Das erfindungsgemäße ZnO eignet sich aufgrund seiner hohen Oberfläche ebenfalls als Adsorbens für schwefelhaltige Verbindungen in Kohlenwasserstoffen (z.B. beim steam reforming) oder Gasen (wie Erdgas und Synthesegas), z.B. von H₂S, CS₂, Methanthiol, etc. Das erfindungsgemäß erhaltene ZnO ermöglicht Beladungskapazitäten von mehr als 40%, bis 50 ± 1%, d.h. mit 2,4 g ZnO (erfindungsgemäß) können bis zu 1,2 g Schwefel entfernt werden.

In weiteren bevorzugten Ausgestaltungen der vorliegenden Erfindung findet das erfindungsgemäße ZnO Verwendung als Photokatalysator in der heterogenen Katalyse. Dabei wird insbesondere die Verwendung bei dem photokatalytischen Abbau von organischen, insbesondere chlororganischen Verbindungen beansprucht.

Es kann bevorzugt sein, dass es sich bei den chlororganischen Verbindungen um aliphatische und aromatische Kohlenwasserstoffe und Farbstoffe, Insektizide sowie Stickstoffverbindungen handelt. Des Weiteren können die chlororganischen Verbindungen ausgewählt sein aus der Gruppe bestehend aus perchlorierten Alkanen und Alkenen, insbesondere Tetrachlorethen, polychlorierten Biphenylen, einfach oder mehrfach chlorierten Dioxinen und einfach oder mehrfach chlorierten Dibenzofuranen.

Ebenfalls Gegenstand der vorliegenden Erfindung ist die Verwendung der erfindungsgemäßen nanokristallinen ZnO-Partikel als Beschichtung von Photoelektroden in photogalvanischen und photoelektrischen Zellen sowie eine Photoelektrode, die mit dem erfindungsgemäßen nanokristallinen ZnO beschichtet ist.

Weiterhin wird die Verwendung des erfindungsgemäßen nanokristallinen ZnO in der photokatalytischen Abwasserbehandlung oder in der Elektrochemie beansprucht.

Ebenso kann das erfindungsgemäße nanokristalline ZnO-Pulver in der Pharmazie als entzündungshemmendes und bakteriostatisch wirkendes Mittel Verwendung finden. Es kann auch in medizinischen und kosmetischen Produkten enthalten sein, so z.B. als Sonnenschutz.

Das Material mit hoher Oberfläche kann dabei sofort als Produkt eingesetzt und vertrieben werden.

Das erfindungsgemäße Verfahren ist nachstehend anhand der Ausführungsbeispiele sowie einer Figur näher erläutert, die jedoch nicht als Einschränkung verstanden werden sollen.

Es zeigen:

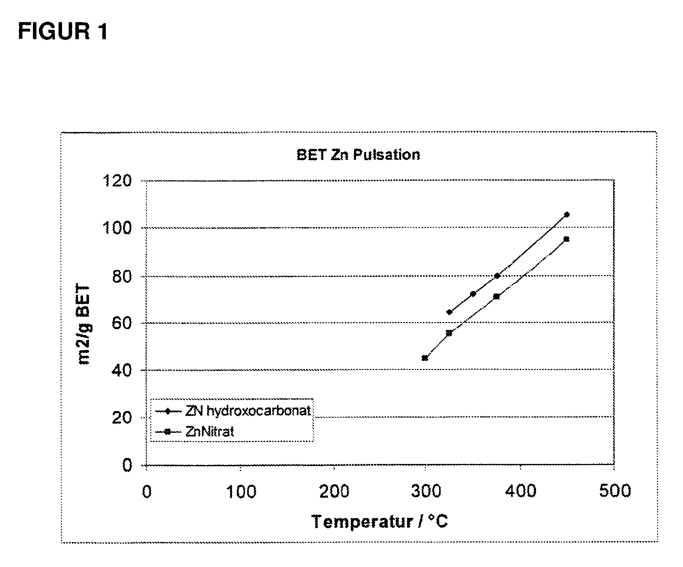

Fig. 1 die Abhängigkeit der BET-Oberfläche von der Temperatur des Reaktors.

Wie schon vorstehend erläutert, entsprach die verwendete Vorrichtung weitgehend der in der DE 1010981 A1 beschriebenen mit dem Unterschied, dass die zur Durchführung des erfindungsgemäßen Verfahrens eingesetzte Vorrichtung keine Verdampfervorstufe aufwies. Außerdem wird eine niedere Verbrennungstemperatur eingesetzt.

### Beispiel 1

Es wurden Lösungen bzw. Suspensionen aus Zn(NO₃)₂, Zn₂(OH)₂CO₃ oder Zn(HCOO)₂ allein, bzw. zusammen eingesetzt.

### 1. Herstellung Suspension:

In ein Blechfass wurden 20 1 Wasser vorgelegt. Unter Rühren wurden langsam 11,51 kg Zinkhydroxocarbonat zugegeben.

Für nicht geträgertes erfindungsgemäßes ZnO wurde ohne Zugabe von Rohton (Bentonit) gearbeitet. Für die geträgerte Variante wurde anschließend noch 3333 g Rohton (BE30) zugegeben.

Mittels Ultra-Turrax wurde die Suspension dann dispergiert (15 min.). Danach wurden der Suspension 45 1 Wasser zugegeben. Die Suspension wurde stark gerührt, um eine Sedimentation zu vermeiden.

Bei Zinknitrat und Zinkformiat als Ausgangsmaterial wurde die Synthese analog durchgeführt.

### 2. Eindüsung Wirbelschicht:

Die Verweilzeit des Pulvers in der Wirbelschicht lag bei ca. 1-2 Sekunden. Es wurde eine 2 mm Düse verwendet.

### 3. Oberflächenbestimmung nach BET

Die BET-Messungen (Brunauer, Emmett und Teller) wurden gemäß DIN 66131 bzw. 66132 durchgeführt.

Die BET-Messungen wurden mit Geräten der Firma Micromeritics des Typs "Flow Sorb II 2300" durchgeführt. Für die BET-Messungen wird zwischen 0,4 und 0,8 g Probenmaterial in ein dem Gerät zugehörigen U-Rohr eingewogen. Die Proben werden mithilfe einer Heiztasche bei einer Temperatur von 105 °C ca. 20 Minuten lang ausgeheizt, um evtl. Spuren von Wasser zu beseitigen. Anschließend wird das U-Rohr in die Messzelle eingehängt. Die Geräte messen die Veränderungen eines Stickstoff-Helium-Gasgemisches (Volumenverhältnis 30:70). Dabei wird das Probengefäß in flüssigem Stickstoff gekühlt. Ein Teil des Gasgemisches, welches über die Proben geleitet wird, adsorbiert am Probenmaterial. Beim Erwärmen der gekühlten Proben auf Raumtemperatur wird der adsorbierte Stickstoff desorbiert. Über die Änderungen der Wärmeleitfähigkeit des Gasgemisches kann über die ad- und desorbierte Menge an Stickstoff auf die Oberfläche der Probe geschlossen werden.

Die Ergebnisse von BET-Messungen für ZnO ausgehend von einer Zinknitratlösung und einer Zinkhydroxocarbonatlösung sind in Figur 1 dargestellt. Dort ist die BET-Oberfläche in Relation zur Prozesstemperatur gezeigt.

Hierbei steigt die BET-Oberfläche mit steigender Temperatur an. Bei 450 °C ist eine maximal gemessene BET-Oberfläche von 105 m²/g erreicht. Noch bei einer Temperatur von 300 °C weist das ZnO eine BET-Oberfläche von ca. 45 m²/g oder mehr auf. Ähnliche Kurven wurden auch für ZnO aus Lösungen und Suspensionen aus Zinkformiat erhalten.

## Patentansprüche

1. Geträgertes nanokristallines Zinkoxid mit einer BET-Oberfläche des Zinkoxids von größer 45 m²/g und einer Sekundärkristallitgröße des Zinkoxids im Bereich vom 20 nm bis 100 nm.

2. Geträgertes Zinkoxid nach Anspruch 1, mit einer BET-Oberfläche des Zinkoxids größer 70 m²/g.

3. Geträgertes Zinkoxid nach Anspruch 1 oder 2 mit einem Kohlenstoffgehalt von kleiner 10 %.

4. Geträgertes Zinkoxid nach Anspruch 1 bis 3, wobei die Kristallpartikel des Zinkoxids in ihrer Gesamtheit eine monomodale Größenverteilung aufweisen.

5. Geträgertes Zinkoxid nach Anspruch 1 bis 4, wobei die Kristallpartikel des Zinkoxids eine Morphologie mit einem Isotropie-Formfaktor größer 0,5 aufweisen.

6. Geträgertes Zinkoxid nach Anspruch 1 bis 5, wobei die Kristallpartikel des Zinkoxids eine Aggregation der Teilchen mit einem Aggregationsfaktor AGR von kleiner 0,7 aufweisen.

7. Geträgertes Zinkoxid nach Anspruch 1 bis 6, wobei die Kristallpartikel unmodifiziert vorliegen.

8. Geträgertes Zinkoxid nach einem der Ansprüche 1 bis 7, wobei der Träger ein Material enthält, ausgewählt aus der Gruppe bestehend aus: SiO₂, ZrO₂, Bentonit, Montmorillonit, Al₂O₃, TiO₂, CuO, MgSiO₄, Alumosilikate, oder Mischungen davon.

9. Formkörper, enthaltend geträgertes Zinkoxid nach einem der vorhergehenden Ansprüche.

10. Verfahren zur Herstellung eines geträgerten nanokristallinen Zinkoxids gemäß einem der Ansprüche 1 bis 8, umfassend die Schritte des:
a) Einbringens eines Trägers und einer Zinkausgangsverbindung in Form einer wässrigen Lösung, Aufschlämmung oder Suspension in eine Reaktionskammer mittels eines Trägerfluids,
b) thermischen Behandelns des Trägers und der Zinkausgangsverbindung in einer Behandlungszone der Reaktionskammer mittels einer pulsierenden Strömung bei einer Temperatur von 200 bis 650°C,
c) Bildens von geträgertem nanokristallinen Zinkoxidmaterial,
d) Ausbringens des in Schritt b) und c) erhaltenen geträgerten nanokristallinen Zinkoxidmaterials aus dem Reaktor.

11. Verfahren nach Anspruch 10, wobei als Zinkausgangsverbindung eine Verbindung eingebracht wird, die ausgewählt wird aus der Gruppe bestehend aus: Zinknitrat, Zinkhydroxocarbonat, Zinkformiat oder Mischungen davon.

12. Geträgertes Zinkoxid erhältlich durch das Verfahren nach Anspruch 10 oder 11.

13. Verwendung eines nanokristallinen geträgerten Zinkoxids nach einem der Ansprüche 1 bis 8 oder 12 für die Herstellung eines Katalysators zur Entschwefelung von Kohlenwasserstoffen oder für die Herstellung eines Adsorptionsmittels für Schwefelverbindungen in Kohlenwasserstoffen oder Gasen.

14. Verwendung eines nanokristallinen geträgerten Zinkoxids nach einem der Ansprüche 1 bis 8 oder 12 für den photokatalytischen Abbau von organischen, insbesondere chlororganischen Verbindungen, sowie in der photokatalytischen Abwasserbehandlung oder als Beschichtung von Photoelektroden in photogalvanischen und photoelektrischen Zellen.

15. Zinkhaltiger Katalysator, umfassend das geträgerte Zinkoxid nach einem der Ansprüche 1 bis 8 oder 12.

## Claims

1. Supported nanocrystalline zinc oxide with a BET surface area of the zinc oxide of greater than 45 m²/g and a secondary crystallite size of the zinc oxide in the range of from 20 nm to 100 nm.

2. Supported zinc oxide according to claim 1, with a BET surface area of the zinc oxide of greater than 70 m²/g.

3. Supported zinc oxide according to claim 1 or 2 with a carbon content of less than 10%.

4. Supported zinc oxide according to claims 1 to 3, wherein the crystal particles of the zinc oxide have a monomodal size distribution overall.

5. Supported zinc oxide according to claim 1 to 4, wherein the crystal particles of the zinc oxide have a morphology with an isotropic form factor of greater than 0.5.

6. Supported zinc oxide according to claims 1 to 5, wherein the crystal particles of the zinc oxide have an aggregation of the particles with an aggregation factor AGR of less than 0.7.

7. Supported zinc oxide according to claims 1 to 6, wherein the crystal particles are present unmodified.

8. Supported zinc oxide according to one of claims 1 to 7, wherein the support contains a material selected from the group consisting of: SiO₂, ZrO₂, bentonite, montmorillonite, Al₂O₃, TiO₂, CuO, MgSiO₄, aluminosilicates, or mixtures thereof.

9. Shaped bodies containing a supported zinc oxide according to one of the previous claims.

10. Method of producing a supported nanocrystalline zinc oxide according to one of claims 1 to 8, comprising the steps of:
a) introducing a support and a zinc starting compound in the form of an aqueous solution, slurry or suspension into a reaction chamber by means of a carrier fluid,
b) thermally treating the support and the zinc starting compound in a treatment zone of the reaction chamber by means of a pulsating flow at a temperature of from 200 to 650°C,
c) forming supported nanocrystalline zinc oxide material,
d) discharging the supported nanocrystalline zinc oxide material obtained in steps b) and c) from the reactor.

11. Method according to claim 10, wherein a compound is introduced as zinc starting compound which is selected from the group consisting of: zinc nitrate, zinc hydroxocarbonate, zinc formate or mixtures thereof.

12. Supported zinc oxide that can be obtained by the method according to claim 10 or 11.

13. Use of a nanocrystalline supported zinc oxide according to one of claims 1 to 8 or 12 for producing a catalyst for desulphurizing hydrocarbons or for producing an adsorbent for sulphur compounds in hydrocarbons or gases.

14. Use of a nanocrystalline supported zinc oxide according to one of claims 1 to 8 or 12 for the photocatalytic decomposition of organic, in particular chloroorganic compounds, as well as in photocatalytic waste water treatment or as coating for photoelectrodes in photogalvanic and photoelectric cells.

15. Zinc-containing catalyst, comprising the supported zinc oxide according to one of claims 1 to 8 or 12.

## Revendications

1. Oxyde de zinc nanocristallin supporté avec une surface spécifique de l'oxyde de zinc supérieure à 45 m²/g et une taille de cristallite secondaire de l'oxyde de zinc dans la plage de 20 nm à 100 nm.

2. Oxyde de zinc supporté selon la revendication 1, avec une surface spécifique de l'oxyde de zinc supérieure à 70 m²/g.

3. Oxyde de zinc supporté selon la revendication 1 ou 2, avec une teneur en carbone inférieure à 10 %.

4. Oxyde de zinc supporté selon les revendications 1 à 3, dans lequel les particules cristallines de l'oxyde de zinc présentent dans leur globalité une répartition de taille monomodale.

5. Oxyde de zinc supporté selon les revendications 1 à 4, dans lequel les particules cristallines de l'oxyde de zinc présentent une morphologie avec un facteur de forme d'isotropie supérieur à 0,5.

6. Oxyde de zinc supporté selon les revendications 1 à 5, dans lequel les particules cristallines de l'oxyde de zinc présentent une agrégation des particules avec un facteur d'agrégation AGR inférieur à 0,7.

7. Oxyde de zinc supporté selon les revendications 1 à 6, dans lequel les particules cristallines sont sous forme non modifiée.

8. Oxyde de zinc supporté selon les revendications 1 à 7, dans lequel le support contient un matériau sélectionné parmi le groupe constitué de : SiO₂, ZrO₂, la bentonite, la montmorillonite, Al₂O₃, TiO₂, CuO, MgSiO₄, des alumosilicates ou des mélanges de ceux-ci.

9. Corps moulé contenant un oxyde de zinc supporté selon l'une quelconque des revendications précédentes.

10. Procédé de fabrication d'un oxyde de zinc nanocristallin supporté selon l'une quelconque des revendications 1 à 8, comprenant les étapes de :
a) introduction d'un support et d'un composé de départ de zinc sous forme d'une solution ou suspension aqueuse dans une chambre réactionnelle au moyen d'un fluide porteur,
b) traitement thermique du support et du composé de départ de zinc dans une zone de traitement de la chambre réactionnelle au moyen d'un écoulement pulsé à une température de 200 à 650°C,
c) formation de matériau d'oxyde de zinc nanocristallin supporté,
d) évacuation du matériau d'oxyde de zinc nanocristallin supporté obtenu aux étapes b) et c) du réacteur.

11. Procédé selon la revendication 10, dans lequel un composé qui est sélectionné parmi le groupe constitué du : nitrate de zinc, hydroxocarbonate de zinc, formiate de zinc ou de mélanges de ceux-ci est introduit en tant que composé de départ de zinc.

12. Oxyde de zinc supporté obtenu par le procédé selon la revendication 10 ou 11.

13. Utilisation d'un oxyde de zinc nanocristallin supporté selon l'une quelconque des revendications 1 à 8 ou 12 pour la fabrication d'un catalyseur pour la désulfuration d'hydrocarbures ou pour la fabrication d'un agent d'adsorption pour des composés soufrés dans des hydrocarbures ou des gaz.

14. Utilisation d'un oxyde de zinc nanocristallin supporté selon l'une quelconque des revendications 1 à 8 ou 12 pour la dégradation photocatalytique de composés organiques, notamment chloro-organiques, ainsi que dans le traitement photocatalytique des eaux usées ou en tant que revêtement de photo-électrodes dans des cellules photogalvaniques et photoélectriques.

15. Catalyseur contenant du zinc, comprenant l'oxyde de zinc supporté selon l'une quelconque des revendications 1 à 8 ou 12.
